**Europäisches Patentamt**

**European Patent Office**

**Office européen des brevets**

(19)

(11) Veröffentlichungsnummer: **0 006 503**
**B1**

(12)

# EUROPÄISCHE PATENTSCHRIFT

(45) Veröffentlichungstag der Patentschrift:
**28.07.82**

(51) Int. Cl.³: **C 08 L 51/00, C 08 L 51/04**

(21) Anmeldenummer: **79101822.9**

(22) Anmeldetag: **08.06.79**

(54) **Witterungsbeständige, schlagzähe thermoplastische Massen mit guter Einfärbbarkeit, ihre Verwendung und dabei erhaltene Formkörper.**

(30) Priorität: **20.06.78 DE 2826925**

(43) Veröffentlichungstag der Anmeldung:
**09.01.80 Patentblatt 80/1**

(45) Bekanntmachung des Hinweises auf die Patenterteilung:
**28.07.82 Patentblatt 82/30**

(84) Benannte Vertragsstaaten:
**BE DE FR GB NL**

(56) Entgegenhaltungen:
**AT-B-263 354**
**DB-B-2 021 898**
**US-A-3 830 878**
**US-A-3 928 494**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft,**
**Carl-Bosch-Strasse 38, D-6700 Ludwigshafen (DE)**

(72) Erfinder: **Swoboda, Johann, Dr., Sternstrasse 122,**
**D-6700 Ludwigshafen (DE)**
Erfinder: **Lindenschmidt, Gerhard, Dr., Buchenweg 11,**
**D-6906 Leimen (DE)**
Erfinder: **Bernhard, Claus, Dr., Uhlandstrasse 11,**
**D-6719 Eisenberg 1 (DE)**

Witterungsbeständige, schlagzähe thermoplastische Massen mit guter Einfärbbarkeit, ihre Verwendung und dabei erhaltene Formkörper

Die Erfindung betrifft Mischungen aus mit kautschukartigen Acrylester-Polymerisaten schlagzäh modifizierten Styrol-Acrylnitril-Copolymerisaten, die witterungsbeständige, thermoplastische Formmassen mit hoher Schlagzähigkeit bei gleichzeitig guter Einfärbbarkeit liefern.

Es ist bekannt, thermoplastisch verarbeitbare schlagzähe Formmassen herzustellen, indem man Styrol/Acrylnitril-Copolymerisate durch Einarbeiten von Kautschuken modifiziert. Dies geschieht im allgemeinen durch Pfropfmischpolymerisation von Styrol und Acrylnitril in Gegenwart des Kautschuks sowie gegebenenfalls nachträglich Abmischen dieses Pfropfproduktes mit einer separat hergestellten Hartkomponente, die im allgemeinen aus einem Styrol-Acrylnitril-Copolymerisat besteht. Je nach Art des bei der Herstellung eingesetzten Kautschuks werden Formmassen mit unterschiedlichem Eigenschaftsbild erhalten.

Bei den sogenannten ABS-Polymerisaten werden als Kautschuk zur Schlagfestmodifizierung Dien-Polymerisate verwendet. Die so erhaltenen Produkte besitzen eine gute Schlagzähigkeit, insbesondere auch bei sehr niedrigen Temperaturen; ein Problem stellt jedoch ihre relativ geringe Witterungs- und Alterungsbeständigkeit dar. Will man nicht nur schlagfeste, sondern gleichzeitig auch witterungs- und alterungsbeständige Produkte erhalten, müssen bei der Pfropfmischpolymerisation gesättigte Kautschuke eingesetzt werden. Als solche haben sich insbesondere die kautschukelastischen, vorzugsweise vernetzten Acrylsäureester-Polymerisate als geeignet erwiesen. Die entsprechenden Formmassen, die auch als ASA-Polymerisate bezeichnet werden, werden vornehmlich verwendet für Gartenmöbel, Boote, Schilder, Strassenlampenabdeckungen usw., wobei für viele Anwendungszwecke gefärbte Produkte, die einen leuchtenden und brillanten Farbeindruck geben, gewünscht werden.

Die Herstellung der witterungs- und alterungsbeständigen ASA-Polymerisate ist u.a. in der US-PS 3 055 859 und der DE-PS 1 260 135 beschrieben. Dabei wird zunächst das als Pfropfgrundlage dienende kautschukartige Acrylsäureester-Polymerisat durch Emulsionspolymerisation von Acrylsäureestern mit 4 bis 8 Kohlenstoffatomen hergestellt. Der dabei entstehende Latex hat einen mittleren Teilchendurchmesser im allgemeinen im Bereich < 100 nm. Anschliessend wird auf diesen Polyacrylsäureester-Latex ein Gemisch von Styrol und Acrylnitril aufgepfropft, wobei die Pfropfmischpolymerisation ebenfalls vorzugsweise in Emulsion durchgeführt wird. Zur Erzielung von ASA-Polymerisaten mit guten mechanischen Eigenschaften hat es sich als notwendig erwiesen, dass der als Pfropfgrundlage dienende Polyacrylsäureester-Kautschuk vernetzt ist, d.h., dass bei seiner Herstellung die Acrylsäureester mit geringen Mengen von bifunktionellen, vernetzend wirkenden Monomeren copolymerisiert werden.

Eine weitere Fortbildung des aus der DE-PS 1 260 135 bekannten Verfahrens zur Herstellung von ASA-Polymerisaten ist in der DE-OS 1 911 882 beschrieben. Nach dieser Druckschrift wird als Pfropfgrundlage bei der Pfropfpolymerisation ein «grossteiliger» Latex eines vernetzten Acrylsäureester-Polymerisats mit einem mittleren Teilchendurchmesser zwischen 150 und 800 nm und einer engen Teilchengrössenverteilung eingesetzt. Gegenüber den Produkten, die unter Verwendung von kleinteiligen Acrylsäureester-Polymerisat-Latices als Pfropfgrundlage hergestellt worden sind, zeichnen sich die ASA-Polymerisate, bei deren Herstellung grossteilige Acrylsäureester-Polymerisat-Latices eingesetzt worden sind, durch verbesserte Kerbschlagzähigkeit, grössere Härte und verminderte Schrumpfung aus. Im Gegensatz zu den ASA-Polymerisaten auf Basis von kleinteiligen Pfropfmischpolymerisaten lassen sich die ASA-Polymerisate auf Basis der grossteiligen Pfropfmischpolymerisate wegen ihrer schlechten Einfärbbarkeit aber nur sehr bedingt zur Herstellung von farbigen Formkörpern verwenden. Färbt man ASA-Polymerisate auf Basis von grossteiligen Pfropfmischpolymerisaten ein, lassen sich nur stumpfe Farbtönungen mit pastellartigem Charakter erhalten, nicht jedoch die vom Markt verlangten brillanten leuchtenden Farbeinstellungen ohne Eintrübung.

Es bestand die Aufgabe, witterungsbeständige Produkte auf Basis von ASA-Polymerisaten zu schaffen, welche neben den günstigen Eigenschaften der bekannten Formmassen dieser Art, wie Witterungs- und Alterungsbeständigkeit, Steifigkeit und Festigkeit, nicht nur eine deutlich verbesserte Schlagzähigkeit aufweisen, sondern darüber hinaus auch eine gute Einfärbbarkeit besitzen sollen, die die Herstellung von Formkörpern mit brillanten, leuchtenden Farben gestattet.

Diese Aufgabe wird durch die erfindungsgemässen Massen aus einer Mischung auf Basis von zwei verschiedenen Pfropfmischpolymerisaten des Styrols und Acrylnitrils auf vernetzte, kautschukartige Acrylsäureester-Polymerisate gelöst.

Gegenstand der Erfindung sind somit witterungsbeständige, schlagzähe thermoplastische Massen mit guter Einfärbbarkeit, bestehend im wesentlichen aus einer Mischung von

(A) einem ersten Pfropfmischpolymerisat, das gebildet wird aus

(A1) 55 bis 75 Gew.-%, vorzugsweise 60 bis 70 Gew.-%, bezogen auf (A), eines vernetzten Acrylester-Polymerisats mit einer Glasübergangstemperatur unter 0 °C und einem mittleren Teilchendurchmesser (Gewichtsmittel) von 50 bis 150 nm, als Pfropfgrundlage, worauf

(A2) 45 bis 25 Gew.-%, vorzugsweise 40 bis 30 Gew.-%, bezogen auf (A), einer Mischung von Styrol und Acrylnitril im Gewichtsverhältnis 80:20 bis 65:35 aufgepfropft sind,

(B) einem zweiten, getrennt hergestellten Pfropfmischpolymerisat, das gebildet wird aus

(B1) 60 bis 80 Gew.-%, vorzugsweise 65 bis 80 Gew.-%, bezogen auf (B), eines vernetzten Acrylester-Polymerisats mit einer Glasübergangstemperatur unter 0 °C und einem mittleren Teilchendurchmesser (Gewichtsmittel) im Bereich von 200 bis 500 nm, als Pfropfgrundlage, worauf

(B2) 40 bis 20 Gew.-%, vorzugsweise 35 bis 20 Gew.-%, bezogen auf (B), einer Mischung von Styrol und Acrylnitril im Gewichtsverhältnis 80:20 bis 65:35 aufgepfropft sind, und

(C) eine Hartkomponente aus einem oder mehreren Copolymerisaten von Styrol und/oder α-Methylstyrol mit Acrylnitril, wobei diese Copolymerisate 20 bis 40 Gew.-% Acrylnitril einpolymerisiert enthalten,

mit der Massgabe, dass in der Mischung [(A) + (B) + (C)] das Gewichtsverhältnis der Pfropfgrundlagen (A1):(B1) im Bereich von 90:10 bis 35:65 liegt und der Anteil der Summe der beiden Pfropfgrundlagen [(A1) + (B1)] 10 bis 35 Gew.-%, bezogen auf die Gesamtmischung [(A) + (B) + (C)], beträgt.

Die erfindungsgemässen Mischungen können als weitere Komponente (D) gegebenenfalls übliche Zusatz- und/oder Hilfsstoffe in gebräuchlichen und wirksamen Mengen enthalten.

In der DE-AS 1 745 098 wird bereits ein Polymerisatgemisch aus einem thermoplastischen Styrol/Acrylnitril-Copolymerisat und zwei Pfropfmischpolymerisaten mit unterschiedlicher Teilchengrösse beschrieben. Die beiden Pfropfmischpolymerisate bestehen aus Styrol und Acrylnitril, die auf ein Polymerisat eines aliphatischen 1,3-Diens als Pfropfgrundlage aufgepfropft sind. Bei den in dieser Druckschrift beschriebenen Produkten handelt es sich also um die eingangs erwähnten ABS-Polymerisate, die von den erfindungsgemässen ASA-Polymerisaten deutlich unterschieden sind. Mit der in der DE-AS 1 745 098 vermittelten Lehre wird das Ziel verfolgt, einen Polymerverschnitt mit hoher Schlagzähigkeit, hohem Glanz und guten Zugeigenschaften zu schaffen. Das Problem der Einfärbbarkeit tritt bei diesen Formmassen, im Gegensatz zu den erfindungsgemässen witterungsbeständigen ASA-Formmassen, nicht auf. Die grossteiligen Pfropfcopolymerisate in den Mischungen gemäss der DE-AS 1 745 098 sollen zudem eine mittlere Teilchengrösse von 800 bis 2000 nm besitzen. Von der Verwendung von grossteiligen Pfropfmischpolymerisaten, deren mittlerer Teilchendurchmesser im Grössenbereich der grossteiligen Pfropfmischpolymerisate der vorliegenden Erfindung liegt, ist in dieser Druckschrift nicht die Rede, auch nicht davon, welches Eigenschaftsbild bei den witterungsbeständigen ASA-Polymerisaten durch die Verwendung zweier Pfropfmischpolymerisate mit den in Rede stehenden Teilchengrössen erwartet werden kann.

Der Fachmann musste davon ausgehen, dass bei Abmischen ASA-Polymerisaten auf Basis von kleinteiligen Pfropfmischpolymerisaten, wie sie z.B. aus der DE-PS 1 260 135 bekannt sind, mit ASA-Polymerisaten auf Basis von grossteiligen Pfropfmischpolymerisaten, wie sie aus der DE-PS 1 911 888 bekannt sind, Produkte resultieren, deren Eigenschaften sich additiv aus den Eigenschaften der Mischungskomponenten zusammensetzen. Es war überraschend, dass entgegen dieser Erwartung in den erfindungsgemässen Mischungen die beiden Pfropfmischpolymerisate ein synergistisches Zusammenwirken zeigen, was sich z.B. in dem grossen Anstieg der Kerbschlagzähigkeit bei den erfindungsgemässen Mischungen deutlich macht. Es war auch in keiner Weise zu erwarten, dass die erfindungsgemässen Mischungen die gleiche gute Einfärbbarkeit aufweisen wie die ASA-Polymerisate auf Basis von kleinteiligen Pfropfmischpolymerisaten (Komponente A), obwohl die Mischungen 50% und mehr eines grossteiligen Pfropfmischpolymerisates enthalten, welches eine völlig unbefriedigende Einfärbbarkeit besitzt.

Die Komponenten (A) und (B) der erfindungsgemässen Mischungen werden durch Pfropfmischpolymerisation einer Mischung von Styrol und Acrylnitril auf ein vernetztes, kautschukartiges Acrylsäureester-Polymerisat hergestellt. Da bei der Pfropfmischpolymerisation keine 100%ige Pfropfausbeute erzielbar ist, enthält das Polymerisationsprodukt der Pfropfmischpolymerisation stets einen Anteil an freiem, nichtgepfropftem Styrol-Acrylnitril-Copolymerisat. Unter Pfropfmischpolymerisat im Sinne dieser Erfindung wird jedoch nur der mit Styrol und Acrylnitril tatsächlich gepfropfte Kautschuk bezeichnet. Der Anteil des Pfropfmischpolymerisats in dem Polymerisationsprodukt der Pfropfmischpolymerisation lässt sich in bekannter Weise durch Extraktion des freien, nichtgepfropften Styrol-Acrylnitril-Copolymerisats aus dem Polymerisationsprodukt z.B. mittels Methyläthylketon ermitteln, da die Pfropfgrundlage des Pfropfmischpolymerisats vernetzt und das Pfropfmischpolymerisat somit unlöslich ist. Die Prinzipien des Trennverfahrens wurden schon von Moore, Moyer und Frazer, Appl. Polymer Symposia No. 7, Seite 67ff. (1968) beschrieben.

Unter Pfropfgrad wird im Rahmen dieser Erfindung der prozentuale Anteil des in den Pfropfästen des Pfropfmischpolymerisats chemisch gebundenen Styrols und Acrylnitrils, bezogen auf das gesamte Pfropfmischpolymerisat, verstanden. Der Pfropfgrad lässt sich leicht aus der analytisch bestimmbaren Zusammensetzung des methyläthylketonunlöslichen Gels berechnen.

Bei den erfindungsgemässen mittleren Teilchengrössen handelt es sich in allen Fällen um das Gewichtsmittel der Teilchengrössen, wie sie mittels einer analytischen Ultrazentrifuge entsprechend der Methode von W. Scholtan und H. Lange, Kolloid-Z. und Z.-Polymere 250 (1972), Seiten 782–796, bestimmt wurden. Die Ultrazentrifugenmessung liefert die integrale Massenverteilung des Teilchendurchmessers einer Probe. Hieraus lässt sich entnehmen, wieviel Gewichtsprozent der Teilchen einen Durchmesser gleich oder kleiner einer bestimmten Grösse haben. Der mittlere Teilchendurchmesser, der auch als $d_{50}$-Wert der integralen Massenverteilung bezeichnet wird, ist dabei als der Teilchendurchmesser definiert, bei dem 50 Gewichtsprozent der Teilchen einen kleineren Durchmesser haben als der Durchmesser, der dem $d_{50}$-Wert entspricht. Ebenso haben dann 50 Gew.-% der Teilchen einen grösseren Durchmesser als der $d_{50}$-Wert. Zur Charakterisierung der Breite der Teilchengrössenverteilung der Kautschukteilchen werden neben dem $d_{50}$-Wert (mittlerer Teilchendurchmesser) die sich aus der integralen Massenverteilung ergebenden $d_{10}$- und $d_{90}$-Werte herangezogen. Der $d_{10}$- bzw. $d_{90}$-Wert der integralen Massenverteilung ist dabei entsprechend dem $d_{50}$-Wert definiert mit dem Unterschied, dass sie auf 10 bzw. 90 Gew.-% der Teilchen bezogen sind. Der Quotient

$$\frac{d_{90}-d_{10}}{d_{50}} = Q$$

stellt ein Mass für die Verteilungsbreite der Teilchengrösse dar.

Die Herstellung der erfindungsgemäss einzusetzenden beiden Pfropfmischpolymerisate, Komponenten (A) und (B), erfolgt nach den an sich bekannten Methoden in gebräuchlicher Art und Weise. Als Pfropfgrundlagen (A1) und (B1) dienen bei den beiden Pfropfmischpolymerisaten (A) und (B) vernetzte Acrylsäureester-Polymerisate mit einer Glasübergangstemperatur unter 0 °C. Die vernetzten Acrylsäureester-Polymerisaten sollen vorzugsweise eine Glastemperatur unter $-20\,°C$, insbesondere unter $-30\,°C$ besitzen. Die Ermittlung der Glasübergangstemperatur der Acrylsäureester-Polymerisate kann z.B. nach der DSC-Methode (K.H. Illers, Makromol. Chemie 127 (1969), S. 1) erfolgen. Für die Herstellung der Acrylsäureester-Polymerisate kommen insbesondere die Acrylsäurealkylester mit 2 bis 8 Kohlenstoffatomen, vorzugsweise mit 4 bis 8 Kohlenstoffatomen, im Alkylrest in Betracht. Als Acrylsäurealkylester, die zur Herstellung der Acrylsäureester-Polymerisate geeignet sind, seien besonders Acrylsäure-n-butylester und Acrylsäureäthylhexylester genannt. Die Acrylsäureester können bei der Herstellung der als Pfropfgrundlage dienenden Acrylsäureester-Polymerisate allein oder auch in Mischung miteinander eingesetzt werden.

Um vernetzte Acrylsäureester-Polymerisate zu erhalten, wie sie als Pfropfgrundlagen (A1) und (B1) für die Herstellung der Pfropfmischpolymerisate (A) und (B) eingesetzt werden sollen, wird vorzugsweise die Polymerisation der Acrylsäureester in Gegenwart von 0,5 bis 10 Gew.-%, vorzugsweise 1 bis 5 Gew.-%, bezogen auf die bei der Herstellung der Pfropfgrundlagen eingesetzten gesamten Monomeren, eines copolymerisierbaren, mehrfunktionellen, vorzugsweise bifunktionellen, die Vernetzung bewirkenden Monomeren durchgeführt. Als solche bi- oder mehrfunktionellen Vernetzungs-Monomeren eignen sich Monomere, die vorzugsweise zwei, gegebenenfalls auch mehr, zur Copolymerisation befähigte äthylenische Doppelbindungen enthalten, die nicht in den 1,3-Stellungen konjugiert sind. Geeignete Vernetzungs-Monomere sind beispielsweise Divinylbenzol, Diallylmaleat, Diallylfumarat oder Diallylphthalat. Als besonders günstiges Vernetzungs-Monomeres hat sich der Acrylsäureester des Tricyclodecenylalkohols erwiesen (vgl. DE-PS 1 260 135).

Die Herstellung des erfindungsgemäss einzusetzenden Pfropfmischpolymerisats (A) kann beispielsweise nach der in der DE-PS 1 260 135 beschriebenen Methode erfolgen. Hierzu wird zunächst die Pfropfgrundlage (A1) hergestellt, indem der oder die Acrylsäureester und das mehrfunktionelle, die Vernetzung bewirkende Monomere, gegebenenfalls zusammen mit den weiteren Comonomeren, in wässriger Emulsion in an und für sich bekannter Weise bei Temperaturen zwischen 20 und 100 °C, vorzugsweise zwischen 50 und 80 °C, polymerisiert werden. Es können die üblichen Emulgatoren, wie z.B. Alkalisalze von Alkyl- oder Alkylarylsulfonsäuren, Alkylsulfate, Fettalkoholsulfonate, Salze höherer Fettsäuren mit 10 bis 30 Kohlenstoffatomen oder Harzseifen, verwendet werden. Vorzugsweise nimmt man die Natriumsalze von Alkylsulfonaten oder Fettsäuren mit 10 bis 18 Kohlenstoffatomen. Es ist günstig, die Emulgatoren in Mengen von 0,5 bis 5 Gew.-%, insbesondere von 1 bis 2 Gew.-%, bezogen auf die bei der Herstellung der Pfropfgrundlage (A1) eingesetzten Monomeren, einzusetzen. Im allgemeinen wird bei einem Wasser- zu Monomeren-Verhältnis von 2:1 bis 0,7:1 gearbeitet. Als Polymerisationsinitiatoren dienen insbesondere die gebräuchlichen Persulfate, wie z.B. Kaliumpersulfat, es können jedoch auch Redox-Systeme zum Einsatz gelangen. Die Initiatoren werden im allgemeinen in Mengen von 0,1 bis 1 Gew.-%, bezogen auf die bei der Herstellung der Pfropfgrundlage (A1) eingesetzten Monomeren, eingesetzt. Als weitere Polymerisationshilfsstoffe können die üblichen Puffersubstanzen, durch welche pH-Werte von vorzugsweise 6 bis 9 eingestellt werden – z.B. Natriumbicarbonat und Natriumpyrophosphat –, sowie 0 bis 3 Gew.-% eines Molekulargewichtsreglers – wie Mercaptane, Terpinole oder dimeres α-Methylstyrol – bei der Polymerisation verwendet werden.

Die genauen Polymerisationsbedingungen, insbesondere Art, Dosierung und Menge des Emulgators, werden innerhalb der oben angegebenen Bereiche im einzelnen so bestimmt, dass der erhaltene Latex des vernetzten Acrylsäureester-Polymerisats einen $d_{50}$-Wert im Bereich von 50 bis 150 nm, vorzugsweise im Bereich von 80 bis 100 nm besitzt. Die Teilchengrössen-Verteilung des Latex soll dabei vorzugsweise eng sein. Der Quotient $Q = (d_{90}-d_{10})/d_{50}$ soll kleiner als 0,5, vorzugsweise kleiner als 0,35 sein.

Zur Herstellung des Pfropfmischpolymerisats (A) wird dann in einem nächsten Schritt in Gegenwart des so erhaltenen Latex des vernetzten Acrylsäureester-Polymerisats ein Monomeren-Gemisch aus Styrol und Acrylnitril polymerisiert, wobei das Gewichtsverhältnis von Styrol zu Acrylnitril in dem Monomeren-Gemisch im Bereich von 80:20 bis 65:35, vorzugsweise im Bereich von 75:25 bis 70:30, liegen soll. Es ist vorteilhaft, diese Pfropfmischpolymerisation von Styrol und Acrylnitril auf das als Pfropfgrundlage dienende vernetzte Polyacrylsäureester-Polymerisat wieder in wässriger Emulsion unter den üblichen, oben aufgeführten Bedingungen durchzuführen. Die Pfropfmischpolymerisation kann zweckmässig im gleichen System erfolgen wie die Emulsionspolymerisation zur Herstellung der Pfropfgrundlage (A1), wobei, falls notwendig, weiterer Emulgator und Initiator zugegeben werden kann. Das aufzupfropfende Monomeren-Gemisch aus Styrol und Acrylnitril kann dem Reaktionsgemisch auf einmal, absatzweise in mehreren Stufen oder vorzugsweise kontinuierlich während der Polymerisation zugegeben werden. Die Pfropfmischpolymerisation des Gemisches von Styrol und Acrylnitril in Gegenwart des vernetzten Acrylsäureester-Polymerisats wird so geführt, dass ein Pfropfgrad von 25 bis 45 Gew.-%, vorzugsweise von 30 bis 40 Gew.-%, im Pfropfmischpolymerisat (A) resultiert. Da die Pfropfausbeute bei der Pfropfmischpolymerisation nicht 100%ig ist, muss eine etwas grössere Menge des Monomeren-Gemisches aus Styrol und Acrylnitril bei der Pfropfmischpolymerisation eingesetzt werden, als es dem gewünschten Pfropfgrad entspricht. Die Steuerung der Pfropfausbeute bei der Pfropfmischpolymerisation und somit des Pfropfgrades des fertigen Pfropfmischpolymerisats (A) ist jedem Fachmann geläufig und kann beispielsweise u.a. durch die Dosiergeschwindigkeit der Monomeren oder durch Reglerzugabe erfolgen (Chauvel, Daniel, ACS Polymer Preprints 15 (1974), Seite 329ff.). Bei der Emulsions-Pfropfmischpolymerisation entstehen im allgemeinen etwa 5 bis 15 Gew.-%, bezogen auf das Pfropfmischpolymerisat, an freiem, ungepfropftem Styrol/Acrylnitril-Copolymerisat. Der Anteil des Pfropfmischpolymerisats (A) in dem bei der Pfropfmischpolymerisation erhaltenen Polymerisationsprodukt wird nach der oben angegebenen Methode ermittelt.

Die Komponente (B) der erfindungsgemässen Mischungen besteht aus einem zweiten Pfropfmischpolymerisat von Styrol und Acrylnitril auf einem vernetzten Acrylsäureester-Polymerisat als Pfropfgrundlage. Um Massen mit dem erfindungsgemäss gewünschten Eigenschaftsbild zu erhalten, hat es sich als wesentlich herausgestellt, dass das zweite, grossteilige Pfropfmischpolymerisat (B) separat von dem ersten, kleinteiligen Pfropfmischpolymerisat (A) hergestellt werden muss. Versucht man die Mischung aus den Pfropfmischpolymerisaten (A) und (B) dadurch herzustellen, dass man bei der Pfropfmischpolymerisation eine Mischung aus der feinteiligen Pfropfgrundlage (A1) und der grossteiligen Pfropfgrundlage (A2) einsetzt, so werden, wie aus den nachfolgenden Versuchen hervorgeht, nicht Produkte mit dem gewünschten Eigenschaftsbild erhalten.

Als Pfropfgrundlage (B1) bei der Herstellung des zweiten Pfropfmischpolymerisats (B) wird ebenfalls ein vernetztes Acrylsäureester-Polymerisat eingesetzt. Bezüglich der Art der bei der Herstellung der Pfropfgrundlage (B2) einzusetzenden Acrylsäureester, der Art und Menge der Vernetzungs-Monomeren sowie der Art und Menge der gegebenenfalls mitzuverwendenden Comonomeren gelten die weiter oben gemachten Ausführungen, auf die hiermit verwiesen sei.

Im Unterschied zu dem vernetzten Acrylsäureester-Polymerisat, das als Pfropfgrundlage (A1) zur Herstellung des Pfropfmischpolymerisats (A) eingesetzt wird, soll das vernetzte Acrylsäureester-Polymerisat, das als Pfropfgrundlage (B1) zur Herstellung des Pfropfmischpolymerisats (B) dient, grossteilig sein. Das bei der Herstellung des zweiten Pfropfmischpolymerisats (B) als Pfropfgrundlage (B1) einzusetzende Acrylsäureester-Polymerisat soll einen mittleren Teilchendurchmesser (Gewichtsmittel) im Bereich von 200 bis 500 nm, vorzugsweise im Bereich von 250 bis 400 nm besitzen. Es ist erstrebenswert, wenn dieses grossteilige, vernetzte Acrylsäureester-Polymerisat (B2) eine enge Teilchengrössenverteilung aufweist, wobei es günstig ist, wenn der Quotient $Q = (d_{90} - d_{10})/d_{50}$ kleiner als 0,3, vorzugsweise kleiner als 0,2 ist. Die Herstellung des als Pfropfgrundlage (B2) dienenden grossteiligen vernetzten Acrylsäureester-Polymerisats kann nach den bekannten Polymerisationsweisen zur Herstellung grossteiliger Dispersionen vorgenommen werden, erfolgt jedoch zweckmässigerweise nach der Saatlatex-Methode, wie sie in der DE-PS 1 911 882 für die Herstellung von ASA-Polymerisaten beschrieben ist. Nach dieser Methode wird zur Herstellung des vernetzten Acrylsäureester-Polymerisat-Latex mit einem mittleren Teilchendurchmesser in dem oben erwähnten Bereich ein Saatlatex vorgelegt, dessen Teilchendurchmesser vorzugsweise unter 120 nm liegt und der durch übliche Emulsionspolymerisation der Acrylsäureester, der Vernetzungs-Monomeren sowie der gegebenenfalls verwendeten Comonomeren in der für die Herstellung der feinteiligen Pfropfgrundlage (A1) beschriebenen Weise erzeugt worden ist. Die Weiterpolymerisation dieses Saatlatex erfolgt durch Zugabe von weiteren Monomeren und Emulgator. Dabei werden die Bedingungen in bekannter Weise [s. z.B. Journal of Applied Polymer Science, Vol. 9 (1965), Seiten 2929 bis 2938] so eingestellt, dass lediglich die vorhandenen Polymerisatpartikeln des Saatlatex weiter wachsen, aber keine neuen Latexteilchen gebildet werden. Die Teilchengrösse des resultierenden grossteiligen Latex lässt sich durch Variation des Mengenverhältnisses von Saatlatex zu Monomeren in der gewünschten Weise einstellen.

Zur Herstellung des erfindungsgemässen zweiten Pfropfmischpolymerisats (B) wird in Gegenwart des zuvor hergestellten grossteiligen Latex des vernetzten AcrylsäureesterPolymerisats (B1) ein Monomeren-Gemisch aus Styrol und Acrylnitril polymerisiert, wobei das Gewichtsverhältnis von Styrol zu Acrylnitril in diesem Monomeren-Gemisch 80:20 bis 65:35 betragen soll. Die Pfropfmischpolymerisation wird dabei wie bei der Herstellung des feinteiligen Pfropfmischpolymerisates (A) in Emulsion durchgeführt. Dabei werden die üblichen Polymerisationshilfsmittel, wie Katalysatoren, Regler und Emulgatoren, und auch die üblichen Polymerisationsbedingungen, wie Temperatur u.dgl., angewendet, wie sie bereits weiter oben für die Emulsionspolymerisation beschrieben worden sind. Bei der Pfropfmischpolymerisation zur Herstellung des zweiten Pfropfmischpolymerisats (B) wird das Monomeren-Gemisch aus Styrol und Acrylnitril in solchen Mengen eingesetzt und werden solche Polymerisationsbedingungen eingestellt, dass ein Pfropfmischpolymerisat mit einem Pfropfgrad von 20 bis 40 Gew.-%, vorzugsweise 20 bis 35 Gew.-%, resultiert. Wegen der Einstellung des Pfropfgrades bei der Pfropfmischpolymerisation und der Bestimmung des Anteils des Pfropfmischpolymerisats im Polymerisationsprodukt gelten die für die Herstellung des ersten Pfropfmischpolymerisats (A) gemachten Ausführungen entsprechend.

Neben den beiden Pfropfmischpolymerisaten (A) und (B) enthalten die erfindungsgemässen Mischungen als weitere Komponente (C) eine Hartkomponente aus einem oder mehreren Copolymerisaten von Styrol und/oder α-Methylstyrol mit Acrylnitril. Der Acrylnitril-Gehalt in diesen Copolymerisaten der Hartkomponente (C) muss 20 bis 40 Gew.-%, bezogen auf das jeweilige Copolymerisat der Hartkomponente, betragen. Zu dieser Hartkomponente (C) zählen auch die bei der Pfropfmischpolymerisation zur Herstellung der Komponenten (A) und (B) entstehenden freien, nicht gepfropften Styrol/Acrylnitril-Copolymerisate. Je nach den bei der Pfropfmischpolymerisation für die Herstellung der Pfropfmischpolymerisate (A) und (B) gewählten Bedingungen kann es möglich sein, dass bei der Pfropfmischpolymerisation schon ein hinreichender Anteil an Hartkomponente (C) gebildet worden ist. Im allgemeinen wird es jedoch nötig sein, die bei der Pfropfmischpolymerisation erhaltenen Produkte mit zusätzlicher, separat hergestellter Hartkomponente (C) abzumischen.

Bei dieser zusätzlichen, separat hergestellten Hartkomponente (C) kann es sich um ein Styrol/Acrylnitril-Copolymerisat, ein α-Methylstyrol/Acrylnitril-Copolymerisat oder ein α-Methylstyrol/Styrol/Acrylnitril-Terpolymerisat handeln. Diese Copolymerisate können einzeln oder auch in Mischung miteinander für die Hartkomponente eingesetzt werden, so dass es sich bei der zusätzlichen, separat hergestellten Hartkomponente (C) der erfindungsgemässen Mischungen beispielsweise um eine Mischung aus einem Styrol/Acrylnitril-Copolymerisat und einem α-Methylstyrol/Acrylnitril-Copolymerisat handeln kann. In dem Fall, in dem die Hartkomponente (C) der erfindungsgemässen Massen aus einer Mischung von einem Styrol/Acrylnitril-Copolymerisat und einem α-Methylstyrol/Acrylnitril-Copolymerisat besteht, soll der Acrylnitril-Gehalt der beiden Copolymerisate tunlichst nicht mehr als 10 Gew.-%, vorzugsweise nicht mehr als 5 Gew.-%, bezogen auf das Copolymerisat, voneinander abweichen. Die Hartkomponente (C) der erfindungsgemässen Massen kann jedoch auch nur aus einem einzigen Styrol/Acrylnitril-Copolymerisat bestehen, nämlich dann, wenn bei den Pfropfmischpolymerisationen zur Herstellung der Komponenten (A) und (B) als auch bei der Herstellung der zusätzlichen, separat hergestellten Hartkomponenten von dem gleichen Monomer-Gemisch aus Styrol und Acrylnitril ausgegangen wird.

Die zusätzliche, separat hergestellte Hartkomponente (C) kann nach den herkömmlichen Methoden erhalten werden. So kann die Copolymerisation des Styrols und/oder α-Methylstyrols mit dem Acrylnitril in Masse, Lösung, Suspension oder wässriger Emulsion durchgeführt werden. Die Hartkomponente (C) hat vorzugsweise eine Viskositätszahl von 40 bis 100, insbesondere von 50 bis 80. Die Bestimmung der Viskositätszahl erfolgt analog DIN 53 726; dabei werden 0,5 g Material in 100 ml Dimethylformamid gelöst.

Die Abmischung der zusätzlich separat hergestellten Hartkomponente (C) mit den bei der Pfropfmischpolymerisation zur Herstellung der Komponenten (A) und (B) erhaltenen Produkte zu den erfindungsgemässen Massen kann so vorgenommen werden, dass ein Teil der Hartkomponente (C) zunächst mit Komponente (A) und der restliche Teil der Hartkomponente (C) zunächst mit der Komponente (B) abgemischt wird, worauf anschliessend die beiden Teilmischungen (A+C) und (B+C) zusammengegeben und vermischt werden. Es ist aber genauso möglich, zunächst die Komponenten (A) und (B) zu vermischen und in dieses Gemisch aus den beiden Pfropfmischpolymerisaten (A+B) anschliessend die zusätzliche, separat hergestellte Hartkomponente (C) einzumischen. Zum Zwecke der Erfindung werden dabei die Komponenten (A), (B) und (C) in solchen Mengen und in solchen Verhältnissen miteinander gemischt, dass in der Gesamt-Mischung (A+B+C) die beiden als Pfropfgrundlage dienenden vernetzten Acrylsäureester-Polymerisate (A1) und (B1) im Gewichtsverhältnis (A1):(B1) von 90:10 bis 35:65 und vorzugsweise von 80:20 bis 50:50 vorliegen, und weiterhin der Anteil der beiden als Pfropfgrundlage dienenden vernetzten Acrylsäureester-Polymerisate zusammen (A1+B1) in der gesamten Mischung (A+B+C) 10 bis 35 Gew.-%, vorzugsweise 15 bis 30 Gew.-%, bezogen auf die Mischung (A+B+C), ausmacht.

Das Abmischen der Komponenten (A), (B) und (C) kann nach jeder beliebigen Weise nach allen bekannten Methoden erfolgen. Wenn die Komponenten z.B. durch Emulsions-Polymerisation hergestellt worden sind, ist es z.B. möglich, die erhaltenen Polymer-Dispersionen miteinander zu vermischen, darauf die Polymerisate gemeinsam auszufällen und das Polymerisat-Gemisch aufzuarbeiten. Vorzugsweise geschieht jedoch das Abmischen der Komponenten (A), (B) und (C) durch gemeinsames Extrudieren, Kneten oder Verwalzen der Komponenten, wobei die Komponenten notwendigenfalls zuvor aus der bei der Polymerisation erhaltenen Lösung oder wässrigen Dispersion isoliert worden sind. Die in wässriger Dispersion erhaltenen Produkte der Pfropfmischpolymerisationen (Komponenten (A) und (B)) können auch nur teilweise entwässert werden und als feuchte Krümel mit der Hartkomponente (C) vermischt werden, wobei dann während des Vermischens die vollständige Trocknung der Pfropfmischpolymerisate erfolgt.

Die erfindungsgemässen Mischungen aus den Komponenten (A), (B) und (C) können als weitere Komponente (D) alle Zusatz- und/oder Hilfsstoffe enthalten, wie sie für ASA-Polymerisate üblich und gebräuchlich sind. Als solche Zusatz- und/oder Hilfsstoffe seinen beispielsweise genannt: Füllstoffe, weitere verträgliche Kunststoffe, Antistatika, Antioxidantien, Flammschutzmittel und Schmiermittel. Die Zusatz- und Hilfsstoffe werden in üblichen und wirksamen Mengen, vorzugsweise in Mengen von 0,1 bis zu insgesamt etwa 30 Gew.-%, bezogen auf die Mischung (A+B+C), eingesetzt.

Es hat sich überraschenderweise gezeigt, dass die erfindungsgemässen Massen trotz des relativ hohen Anteils an grossteiligem Pfropfmischpolymerisat (B) eine sehr gute Einfärbbarkeit besitzen. Unter Einfärbbarkeit wird dabei die Erzielung brillanter Farbtöne mit möglichst kleinen Pigmentmengen verstanden. Die erfindungsgemässen Massen können daher als Zusatzstoff (D) insbesondere Farbstoffe oder Pigmente eingemischt enthalten. Die Farbstoffe oder Pigmente werden der Mischung üblicherweise in Mengen von etwa 0,02 bis etwa 10 Gew.-%, vorzugsweise von 0,2 bis 5 Gew.-%, bezogen auf die Mischung (A+B+C), zugesetzt. Als Farbstoffe und Pigmente kommen beispielsweise in Betracht: Cadmiumsulfid, Kupfer-phthalocyanin, Eisenoxide, feinteilige Russe. Die aus diesen eingefärbten Massen hergestellten Formkörper zeichnen sich durch einen ausgezeichneten Farbeindruck aus, wobei brillante und leuchtende Farbtöne ohne jede Eintrübung oder Grauschleier erhalten werden können. Die aus den gefärbten Massen durch Spritzguss hergestellten Formkörper besitzen überraschenderweise auch praktisch keine unterschiedliche Farbtönung im Bereich der Angussstelle und der Bindenaht, wie sie in unerwünschter Weise bei der Spritzgussverarbeitung von gefärbten ASA-Polymerisaten auf Basis von kleinteiligen Pfropfmischpolymerisaten der Komponente (A) ansonsten im starken Masse zu beobachten sind. Die durch Spritzguss verarbeiteten, gefärbten erfindungsgemässen Massen zeigen hingegen eine gute Farbegalität im Bereich der Angussmarkierung und der Bindenaht. Die Massen der Erfindung besitzen neben der guten Einfärbbarkeit im Vergleich zu den bekannten ASA-Polymerisaten auch eine stark verbesserte Kerbschlagzähigkeit. Wie die nachfolgenden Beispiele zeigen, liegt dabei die Kerbschlagzähigkeit der erfindungsgemässen Mischungen weit über den entsprechenden Werten der Einzelkomponenten. Es zeigt sich auch, dass Schlagzähigkeit und Einfärbbarkeit deutlich abnehmen bzw. verschlechtert werden, wenn das Verhältnis der Pfropfgrundlagen (A1):(B1) in den erfindungsgemässen Mischungen nicht in dem beanspruchten Bereich liegt.

Die erfindungsgemässen Massen lassen sich nach den für die Thermoplastverarbeitung üblichen Verfahren, wie z.B. Extrusion und Spritzgiessen, zu den verschiedenartigsten Formkörpern, wie z.B. Gartenmöbel, Boote, Schilder, Strassenlampenabdeckungen und Kinderspielzeug, verarbeiten. Wie erwähnte, eignen sich die erfindungsgemässen Massen dabei insbesondere zur Herstellung von farbigen Formteilen bzw. Formkörpern der genannten Art, wie sie insbesondere bei Gartenstühlen, Kinderspielzeug und Hinweisschildern Anwendung finden.

Die Erfindung wird durch die nachfolgenden Beispiele näher erläutert. Die in den Beispielen genannten Teile und Prozente beziehen sich, sofern nicht anders angegeben, auf das Gewicht.

Die mittlere Teilchengrösse und die Teilchengrössenverteilung wurde aus der integralen Massenverteilung nach der weiter oben angegebenen Methode bestimmt. Die Ermittlung der Pfropfausbeute und somit des Anteils des Pfropfmischpolymerisats in dem bei der Pfropfmischpolymerisation erhaltenen Produkt erfolgte durch Extraktion dieses Polymerisationsproduktes mit Methyläthylketon bei 25°C. Der Pfropfgrad der Pfropfmischpolymerisate, d.h. der prozentuale Anteil vom im Pfropfmischpolymerisat enthaltenen gepfropften Styrol und Acrylnitril, ergibt sich am einfachsten aus der elementaranalytischen Bestimmung von Stickstoff (aus Acrylnitril) und Sauerstoff (aus Acrylester) im Methyläthylketon unlöslichen Gel. Die Viskositätszahl der Hartkomponenten wurde, wie bereits beschrieben, in Dimethylformamid gemessen. Die Kerbschlagzähigkeit der Massen wurde nach DIN 53 453 an gespritzten Normkleinstäben bei 23°C ermittelt. Die Spritztemperatur für die Normkleinstäbe betrug dabei 250 bzw. 280°C. Die Beurteilung der Einfärbbarkeit erfolgte visuell an eingefärbten, durch Spritzguss hergestellten Formkörpern. Zur Einfärbung der Massen wurde dabei in allen Fällen 0,3 Gew.-% an Ultramarinblau verwendet. Die Einfärbbarkeit wurde aufgrund des erhaltenen Farbeindruckes wie folgt benotet:

Note 1: rein, brillant und klar
Note 2: rein, beinahe brillant, fast klar
Note 3: etwas stumpf, leicht verschleiert
Note 4: stumpf, verschleiert
Note 5: schmutzig und trübe, stark verschleiert

Beispiel 1

(a) Herstellung des feinteiligen Pfropfmischpolymerisats (A)

(a1) 16 Teile Butylacrylat und 0,4 Teile Tricyclodecenylacrylat werden in 150 Teilen Wasser unter Zusatz von einem Teil des Natriumsalzes einer $C_{12}$- bis $C_{18}$-Paraffinsulfonsäure, 0,3 Teilen Kaliumpersulfat, 0,3 Teilen Natriumhydrogencarbonat und 0,15 Teilen Natriumpyrophosphat unter Rühren auf 60°C erwärmt. 10 Minuten nach dem Anspringen der Polymerisationsreaktion wurden innerhalb von 3 Stunden eine Mischung aus 82 Teilen Butylacrylat und 1,6 Teilen Tricyclodecenylacrylat zugegeben. Nach Beendigung der Monomerzugabe wurde noch eine Stunde nachreagieren gelassen. Der erhaltene Latex des vernetzten Butylacrylat-Polymerisats hatte einen Feststoffgehalt von 40 Gew.-%. Die mittlere Teilchengrösse (Gewichtsmittel) wurde zu 76 nm ermittelt. Die Teilchengrössenverteilung war eng (Quotient Q = 0,29).

(a2) 150 Teile des nach (a1) erhaltenen Polybutylacrylat-Latex wurden mit 40 Teilen einer Mischung aus Styrol und Acrylnitril (Gewichtsverhältnis 75:25) und 60 Teilen Wasser gemischt und unter Rühren nach Zusatz von weiteren 0,03 Teilen Kaliumpersulfat und 0,05 Teilen Lauroylperoxid 4 Stunden auf 65 °C erhitzt. Nach Beendigung der Pfropfmischpolymerisation wurde das Polymerisationsprodukt mittels Calciumchloridlösung bei 95 °C aus der Dispersion gefällt, mit Wasser gewaschen und im warmen Luftstrom getrocknet. Der Pfropfgrad des Pfropfmischpolymerisats betrug 35%.

(b) Herstellung des grossteiligen Pfropfmischpolymerisats (B)

(b1) Zu einer Vorlage aus 2,5 Teilen des in der Stufe (a1) dieses Beispiels hergestellten Latex wurden nach Zugabe von 50 Teilen Wasser und 0,1 Teil Kaliumpersulfat im Verlauf von 3 Stunden einerseits eine Mischung aus 49 Teilen Butylacrylat und 1 Teil Tricyclodecenylacrylat und anderseits eine Lösung von 0,5 Teilen des Natriumsalzes einer $C_{12}$- bis $C_{18}$-Paraffinsulfonsäure in 25 Teilen Wasser bei 60 °C zulaufen gelassen. Nach Zulaufende wurde 2 Stunden nachpolymerisiert. Der erhaltene Latex des vernetzten Butylacrylat-Polymerisats hatte einen Feststoffgehalt von 40%. Die mittlere Teilchengrösse (Gewichtsmittel des Latex) wurde zu 288 nm ermittelt. Die Teilchengrössenverteilung war eng (Q = 0,1).

(b2) 150 Teile dieses Latex wurden mit 40 Teilen einer Mischung aus Styrol und Acrylnitril (Verhältnis 75:25) und 110 Teilen Wasser gemischt und unter Rühren nach Zusatz von weiteren 0,03 Teilen Kaliumpersulfat und 0,05 Teilen Lauroylperoxid 4 Stunden auf 65 °C erhitzt. Das bei der Pfropfmischpolymerisation erhaltene Polymerisationsprodukt wurde dann mittels einer Calciumchloridlösung bei 95 °C aus der Dispersion ausgefällt, abgetrennt, mit Wasser gewaschen und im warmen Luftstrom getrocknet. Der Pfropfgrad des Pfropfmischpolymerisats wurde zu 27% ermittelt.

(c) Herstellung der Hartkomponente

Ein Monomeren-Gemisch aus Styrol und Acrylnitril wurde unter üblichen Bedingungen in Lösung polymerisiert. Das erhaltene Styrol/Acrylnitril-Copolymerisat hatte einen Acrylnitril-Gehalt von 35% und eine Viskositätszahl von 80 ml/g.

(d) Herstellung der Abmischungen

Zunächst wurden die beiden nach den Stufen (a) und (b) hergestellten Pfropfprodukte jedes für sich mit dem nach (c) hergestellten Styrol/Acrylnitril-Copolymerisat in einem Extruder bei 280 °C abgemischt. Die so erhaltenen Mischungen (A + C) und (B + C) wurden anschliessend in einem Mischextruder bei 280 °C zusammengemischt. Bei der Mischung der Polymerisate wurden 1% eines Schmiermittels (Diäthylphthalat) und der Farbstoff zugesetzt. Es wurden verschiedene Mischungen hergestellt, in denen sich das Verhältnis der Pfropfgrundlagen des feinteiligen Pfropfmischpolymerisats (A) und des grossteiligen Pfropfmischpolymerisats (B) in der in der nachfolgenden Tabelle angegebenen Weise änderte. Alle Mischungen waren dabei so eingestellt, dass die Summe der beiden Pfropfgrundlagen (A1 + B1) des feinteiligen und des grossteiligen Pfropfmischpolymerisats (A) und (B) in der gesamten Mischung (A + B + C) stets 25% betrug. Die in der nachfolgenden Tabelle zusammengestellten Eigenschaften der Mischungen wurden an den aus diesen Mischungen durch Spritzguss hergestellten Formkörpern ermittelt.

Beispiel 2

Es wurde entsprechend wie in Beispiel 1 gearbeitet, jedoch wurden in den Stufen (a) und (b) die bei der Pfropfmischpolymerisation erhaltenen Produkte nicht aus der wässrigen Dispersion isoliert. Die Herstellung der Mischung erfolgte, indem zunächst die in den Stufen (a) und (b) erhaltenen Dispersionen der Pfropfprodukte miteinander gemischt wurden, die Pfropfprodukte dann gemeinsam gefällt, isoliert und getrocknet wurden und anschliessend mit dem Styrol/Acrylnitril-Copolymerisat (Komponente C) auf einem Mischextruder bei 280 °C unter Zusatz von 1% Schmiermittel (Diäthylphthalat) und dem Farbstoff gemischt wurden. Die Mischung wurde wiederum so eingestellt, dass die Summe der beiden Pfropfgrundlagen (A1 + B1) des feinteiligen und des grossteiligen Pfropfmischpolymerisats (A) und (B) 25%, bezogen auf die Mischung (A + B + C), betrug. Die Ergebnisse sind in der Tabelle enthalten.

Vergleichsversuch D

90 Teilen des nach Beispiel 1(a1) hergestellten Latex wurden mit 60 Teilen des nach Beispiel 1(b1) hergestellten Latex gemischt und anschliessend wie in Beispiel 1(a2) beschrieben, mit 40 Teilen einer Mischung aus Styrol und Acrylnitril (Verhältnis 75:25) gepfropft. Das Polymerisationsprodukt wurde aus der erhaltenen Dispersion, wie in Beispiel 1(a2) beschrieben, isoliert und getrocknet. Der Pfropfgrad der Pfropfmischpolymerisate war 35%. Das so erhaltene Gemisch der Pfropfmischpolymerisate wurde anschliessend auf einen Mischextruder bei 280 °C unter Zusatz von 1% eines Schmiermittels (Diäthylphthalat) und des Farbstoffes mit dem nach Beispiel 1(c) hergestellten Styrol/Acrylnitril-Copolymerisat in einem solchen Verhältnis abgemischt, dass die Summe der Pfropfgrundlagen (A1 + B1) der beiden Pfropfmischpolymerisate 25%, bezogen auf die Mischung aus (A + B + C), betrug. Die Ergebnisse sind ebenfalls in der Tabelle angeführt.

Tabelle

| Beispiel | Versuch-Nr.[1] | Verhältnis (A1:B1)[2] | Kerbschlagzähigkeit kJ/m² | | Einfärb-barkeit |
|---|---|---|---|---|---|
| | | | 250°C[3] | 280°C[3] | |
| 1 | A | 100: 0 | 15 | 43 | 1 |
| | 1 | 80: 20 | 42 | 48 | 1 |
| | 2 | 60: 40 | 43 | 42 | 1 |
| | 3 | 40: 60 | 41 | 37 | 2 |
| | B | 20: 80 | 34 | 33 | 4 |
| | C | 0:100 | 26 | 25 | 5 |
| 2 | 4 | 60: 40 | 40 | 40 | 1 |
| | D | 60: 40 | 25 | 26 | 2 |

[1] Versuche Nr. 1 bis 4 erfindungsgemäss; Versuche Nr. A–D zum Vergleich.
[2] Verhältnis der Pfropfgrundlagen der beiden Pfropfmischpolymerisate in der gesamten Mischung.
[3] Spritzguss-Temperatur zur Herstellung der Prüfkörper.

Wie aus den Ergebnissen hervorgeht, werden nur bei den erfindungsgemässen Versuchen 1 bis 4 Produkte erhalten, die eine ausgezeichnete Kerbschlagzähigkeit bei gleichzeitig hervorragender Einfärbbarkeit besitzen.

**Patentansprüche**

1. Mischung, bestehend im wesentlichen aus
(A) einem ersten Pfropfmischpolymerisat, das gebildet wird aus
(A1) 55 bis 75 Gew.-%, bezogen auf (A), eines vernetzten Acrylester-Polymerisats mit einer Glasübergangstemperatur unter 0°C und einem mittleren Teilchendurchmesser (Gewichtsmittel) von 50 bis 150 nm als Pfropfgrundlage, worauf
(A2) 45 bis 25 Gew.-%, bezogen auf (A), einer Mischung von Styrol und Acrylnitril im Gewichtsverhältnis 80:20 bis 65:35 aufgepfropft sind,
(B) einem zweiten, getrennt hergestellten Pfropfmischpolymerisat, das gebildet wird aus
(B1) 60 bis 80 Gew.-%, bezogen auf (B), eines vernetzten Acrylester-Polymerisats mit einer Glasübergangstemperatur unter 0°C und einem mittleren Teilchendurchmesser (Gewichtsmittel) im Bereich von 200 bis 500 nm als Pfropfgrundlage, worauf
(B2) 40 bis 20 Gew.-%, bezogen auf (B), einer Mischung von Styrol und Acrylnitril im Gewichtsverhältnis von 80:20 bis 65:35 aufgepfropft sind, und
(C) einer Hartkomponente aus einem oder mehreren Copolymerisaten von Styrol und/oder α-Methylstyrol mit Acrylnitril, wobei diese Copolymerisate 20 bis 40 Gew.-% Acrylnitril einpolymerisiert enthalten,
mit der Massgabe, dass in der Mischung [(A)+(B)+(C)] das Gewichtsverhältnis der Pfropfgrundlagen (A1):(B1) im Bereich von 90:10 bis 35:65 liegt und der Anteil der Summe der beiden Pfropfgrundlagen [(A1)+(B1)] 10 bis 35 Gew.-%, bezogen auf die Gesamtmischung [(A)+(B)+(C)], beträgt.

2. Mischung nach Anspruch 1, dadurch gekennzeichnet, dass sie als erstes Pfropfmischpolymerisat (A) ein solches enthält, dessen Pfropfgrundlage (A1) einen mittleren Teilchendurchmesser (Gewichtsmittel) im Bereich von 80 bis 100 nm besitzt.

3. Mischung nach Ansprüchen 1 und 2, dadurch gekennzeichnet, dass sie als erstes Pfropfmischpolymerisat (A) ein solches enthält, welches aus 60 bis 70 Gew.-%, bezogen auf (A), der Pfropfgrundlage (A1) besteht, worauf 40 bis 30 Gew.-% der Mischung von Styrol und Acrylnitril aufgepfropft sind.

4. Mischung nach den Ansprüchen 1 bis 3, dadurch gekennzeichnet, dass sie als zweites Pfropfmischpolymerisat (B) ein solches enthält, dessen Pfropfgrundlage (B1) einen mittleren Teilchendurchmesser (Gewichtsmittel) im Bereich von 250 bis 400 nm besitzt.

5. Mischung nach den Ansprüchen 1 bis 4, dadurch gekennzeichnet, dass sie als zweites Pfropfmischpolymerisat (B) ein solches enthält, welches aus 65 bis 80 Gew.-%, bezogen auf (B), der Pfropfgrundlage (B1) besteht, worauf 35 bis 20 Gew.-%, bezogen auf (B), der Mischung von Styrol und Acrylnitril aufgepfropft sind.

6. Mischung nach den Ansprüchen 1 bis 5, dadurch gekennzeichnet, dass die beiden Pfropfmischpolymerisate (A) und (B) in der Mischung in solchen Mengen enthalten sind, dass das Gewichtsverhältnis der Pfropfgrundlagen (A1):(B1) im Bereich von 80:20 bis 50:50 liegt.

7. Mischung nach den Ansprüchen 1 bis 6, dadurch gekennzeichnet, dass die Komponenten (A), (B) und (C) in solchen Mengen in der Mischung enthalten sind, dass der Anteil der beiden Pfropfgrundlagen (A1)+(B1) zusammen 15 bis 30 Gew.-%, bezogen auf die Gesamt-Mischung [(A)+(B)+(C)], ausmacht.

8. Mischung nach den Ansprüchen 1 bis 7, dadurch gekennzeichnet, dass sie als weitere Komponente (D) übliche Zusatz- und/oder Hilfsstoffe in gebräuchlichen und wirksamen Mengen enthält.

9. Mischung nach Anspruch 8, dadurch gekennzeichnet, dass sie als einen Zusatzstoff einen Farbstoff oder ein Farbpigment eingemischt enthält.

10. Verwendung der Mischung nach Anspruch 9 zur Herstellung von Formkörpern oder Formteilen.

11. Formkörper oder Formteile, hergestellt durch Spritzgussverarbeitung einer Mischung nach Anspruch 9.

## Claims

1. A mixture which consists essentially of

(A) a first graft copolymer which is formed from

(A1) 55 to 75% by weight, based on (A), of a crosslinked acrylic ester polymer having a glass transition temperature of below 0 °C and a mean particle diameter (weight average) of from 50 to 150 nm, as the grafting base, onto which are grafted

(A2) from 45 to 25% by weight, based on (A), of a mixture of styrene and acrylonitrile in a weight ratio of from 80:20 to 65:35,

(B) a second, separately prepared graft copolymer which is formed from

(B1) 60 to 80% by weight, based on (B), of a crosslinked acrylic ester polymer having a glass transition temperature of below 0 °C and a mean particle diameter (weight average) in the range from 200 to 500 nm, as the grafting base, onto which are grafted

(B2) 40 to 20% by weight, based on (B), of a mixture of styrene and acrylonitrile in a weight ratio of from 80:20 to 65:35, and

(C) a hard component consisting of one or more copolymers of styrene and/or α-methylstyrene with acrylonitrile, which copolymers contain 20 to 40% by weight of acrylonitrile as copolymerized units,
with the proviso that in the mixture [(A) + (B) + (C)] the weight ratio of the grafting bases (A1) to (B1) is from 90:10 to 35:65, and the proportion of the sum of the two grafting bases (A1) + (B1)) is from 10 to 35% by weight, based on the total mixture [(A) + (B) + (C)].

2. A mixture as claimed in claim 1, characterized in that it contains as first graft copolymer (A) one whose grafting base (A1) has a mean particle diameter (weight average) in the range of from 80 to 100 nm.

3. A mixture as claimed in claims 1 and 2, characterized in that it contains as first graft copolymer (A) ohne which consists of 60 to 70% by weight, based on (A), of the grafting base (A1), onto which are grafted 40 to 30% by weight of the mixture of styrene and acrylonitrile.

4. A mixture as claimed in claims 1 to 3, characterized in that it contains as second graft copolymer (B) one whose grafting base (B1) has a mean particle diameter (weight average) in the range of from 250 to 400 nm.

5. A mixture as claimed in claims 1 to 4, characterized in that it contains as second graft copolymer (B) one which consists of 65 to 80% by weight, based on (B), of the grafting base (B1), onto which are grafted 35 to 20% by weight, based on (B), of the mixture of styrene and acrylonitrile.

6. A mixture as claimed in claims 1 to 5, characterized in that the two graft copolymers (A) and (B) are present in the mixture in such amounts that the weight ratio of the grafting bases (A1) to (B1) is in the range of from 80:20 to 50:50.

7. A mixture as claimed in claims 1 to 6, characterized in that the components (A), (B) and (C) are present in the mixture in such amounts that the proportion of the two grafting bases (A1) + (B1) together accounts for from 15 to 30% by weight, based on the total mixture [(A) + (B) + (C)].

8. A mixture as claimed in claims 1 to 7, characterized in that conventional additives and/or assistants, in conventional and effective amounts, are present as a further component (D).

9. A mixture as claimed in claim 8, characterized in that a dye or dye pigment is admixed as an additive.

10. Use of a mixture as claimed in claim 9 for the production of moldings or shaped articles.

11. Moldings or shaped articles when manufactured by injection molding a mixture as claimed in claim 9.

## Revendications

1. Composition, constituée essentiellement de:

(A) un premier copolymère de greffage, formé de

(A1) 55 à 75% en poids, par rapport à (A), d'un polymère d'ester acrylique réticulé avec une température de transition vitreuse inférieure à 0 °C et d'une granulométrie moyenne (moyenne pondérale) de 50 à 150 nm, comme base de greffage, sur laquelle sont greffés

(A2) 45 à 25% en poids, par rapport à (A), d'un mélange de styrène et d'acrylonitrile dans un rapport pondéral de 80:20 à 65:35;

(B) un deuxième copolymère de greffage, préparé séparément et formé de

(B1) 60 à 80% en poids, par rapport à (B), d'un polymère d'ester acrylique réticulé avec une température de transition vitreuse inférieure à 0 °C et d'une granulométrie moyenne (moyenne pondérale) dans la gamme de 200 à 500 nm, comme base de greffage, sur laquelle sont greffés

(B2) 40 à 20% en poids, par rapport à (B), d'un mélange de styrène et d'acrylonitrile dans un rapport pondéral de 80:20 à 65:35, et

(C) une composante dure à base d'un ou de plusieurs copolymères du styrène et (ou) de α-méthyl-styrène et de l'acrylonitrile, la proportion de l'acrylonitrile copolymérisé se situant entre 20 et 40% en poids,
avec la mesure que dans le mélange (A) + (B) + (C), le rapport pondéral entre les bases de greffage (A1) et (B1) est compris entre 90:10 et 35:65 et la proportion de la somme des deux bases de greffage (A1) + (B1) est comprise entre 10 et 35% du poids du mélange (A) + (B) + (C).

2. Composition suivant la revendication 1, caractérisée en ce qu'elle contient comme premier copolymère de greffage (A) un copolymère, dont la base de greffage (A1) possède une granulométrie moyenne (moyenne pondérale) dans la gamme de 80 à 100 nm.

3. Composition suivant les revendications 1 et 2, caractérisée en ce qu'elle contient comme premier copolymère de greffage (A) un copolymère composé de 60 à 70% en poids, par rapport à (A), de la base de greffage (A1), sur laquelle sont greffés 40 à 30% en poids du mélange de styrène et d'acrylonitrile.

4. Composition suivant les revendications 1 à 3, caractérisée en ce qu'elle contient comme deuxième copolymère de greffage (B) un copolymère, dont la base de greffage (B1) possède une granulométrie moyenne (moyenne pondérale) dans la gamme de 250 à 400 nm.

5. Composition suivant les revendications 1 à 4, caractérisée en ce qu'elle contient comme deuxième copolymère de greffage (B) un copolymère composé de 65 à 80% en poids, par rapport à (B), de la base de greffage (B1), sur laquelle sont greffés 35 à 20% en poids, par rapport à (B), du mélange de styrène et d'acrylonitrile.

6. Composition suivant les revendications 1 à 5, caractérisée en ce qu'elle contient les deux copolymères de greffage (A) et (B) en des proportions telles que le rapport pondéral entre les bases de greffage (A1) et (B1) se situe dans la gamme de 80:20 à 50:50.

7. Composition suivant les revendications 1 à 6, caractérisée en ce qu'elle contient les composantes (A), (B) et (C) dans des proportions telles que la somme des proportions des deux bases de greffage (A1) + (B1) constitue 15 à 30% en poids par rapport à la somme de (A) + (B) + (C).

8. Composition suivant les revendications 1 à 7, caractérisée en ce qu'elle contient comme composante (D) additionnelle des additifs et (ou) adjuvants usuels en des proportions efficaces habituelles.

9. Composition suivant la revendication 8, caractérisée en ce qu'elle contient comme l'un des additifs un colorant ou pigment colorant incorporé.

10. Utilisation d'une composition suivant la revendication 9 pour la fabrication d'articles moulés.

11. Articles moulés, fabriqués par moulage par injection à partir d'une composition suivant la revendication 9.